# EUROPEAN PATENT APPLICATION

(11) **EP 4 822 471 A1**
(43) Date of publication of application: **14.10.2026**
(21) Application number: 24917097.8
(22) Date of filing: 29.08.2024
(51) Int. Cl.: G05B 23/02, B21B 37/00, G06Q 10/04, G06Q 10/20

(54) **QUALITY DEFECT DIAGNOSTIC DEVICE AND QUALITY DEFECT DIAGNOSTIC METHOD**

(30) Priority: 09.01.2024 JP 2024001194
(71) Applicant: JFE Steel Corporation, Tokyo 100-0011 (JP)
(72) Inventor: TAKAGI, Hiroyuki, Tokyo 100-0011 (JP); HIRATA, Takehide, Tokyo 100-0011 (JP)
(74) Representative: Grünecker Patent- und Rechtsanwälte PartG mbB
(86) International application number: PCT/JP2024/030833
(87) International publication number: WO 2025/150222

(57) **Abstract**

This quality defect diagnostic device comprises: a data division unit for dividing product data to be diagnosed in a two-dimensional manner into prescribed blocks; a data aggregation unit for extracting operation data and facility maintenance data for each pre-established classification of quality defects on the basis of the tendency of occurrence of quality defects in the post-division blocks, and aggregating the extracted operation data and facility maintenance data for each region including two or more blocks in a specific direction of the product; and a quality defect determination unit for determining whether a quality defect has occurred by using a plurality of prediction models that are created for each classification of quality defects and are trained on the relationship between quality data and the post-aggregation operation data and facility maintenance data.

## Description

### Field

The present invention relates to a quality defect diagnosis apparatus and a quality defect diagnosis method.

### Background

Patent Literature 1 discloses, as a method of predicting and diagnosing the quality of a product, a method of associating operational condition data at the time of manufacturing the product with quality determination data in a final process in consideration of a quality determination position on the product, and predicting the quality using a prediction model that has been trained to learn the data.

### Citation List

### Patent Literature

Patent Literature 1: JP 6953990 B

### Summary

### Technical Problem

However, when the quality data are uniformly used regardless of their characteristics in predicting the quality of the product, information related to a plurality of types of quality defects that occur due to different mechanisms would be lost. Therefore, there can be a problem of not achieving sufficient prediction performance even if a prediction model is created based on such quality data.

The present invention has been made in view of the above, and aims to provide a quality defect diagnosis apparatus and a quality defect diagnosis method capable of predicting a quality defect of a product with high accuracy and estimating a factor of the quality defect.

### Solution to Problem

To solve the above-described problem and achieve the object, a quality defect diagnosis apparatus according to the present invention includes: a data division unit configured to two-dimensionally divide product data of a diagnosis target into predetermined blocks, the product data including operational data, facility maintenance data, and quality data; a data aggregation unit configured to extract the operational data and the facility maintenance data for each predetermined classification of quality defects based on an occurrence tendency of quality defects in the divided blocks, and aggregate the extracted operational data and facility maintenance data for each region including two or more blocks in a specific direction of a product; and a quality defect determination unit configured to determine presence or absence of occurrence of a quality defect by using a plurality of prediction models which have been created for each classification of the quality defect and which have been trained to learn a relationship of the quality data with the operational data and the facility maintenance data that have been aggregated.

Moreover, the above-described quality defect diagnosis apparatus according to the present invention further includes a factor estimation unit configured to estimate a factor of the quality defect based on a determination result of the quality defect.

Moreover, the above-described quality defect diagnosis apparatus according to the present invention further includes a result display unit configured to causes an output unit to display at least one of a determination result obtained by the quality defect determination unit and a factor estimation result obtained by the factor estimation unit.

Moreover, in the above-described quality defect diagnosis apparatus according to the present invention, the prediction model is a model created by operations including: two-dimensionally dividing product data of a past performance, including the operational data, the facility maintenance data, and the quality data, into predetermined blocks; classifying the quality defect included in the quality data based on an occurrence tendency of the quality defect in the divided blocks; aggregating the operational data and the facility maintenance data, which have been extracted for each classification of the quality defects, for each region including two or more blocks in a specific direction of the product, and performing training, with machine learning, to learn a relationship of the quality data with the operational data and the facility maintenance data that have been aggregated, for each classification of the quality defect.

Moreover, in the above-described quality defect diagnosis apparatus according to the present invention, the operational data is data that varies over a length in a specific direction of the product.

Moreover, in the above-described quality defect diagnosis apparatus according to the present invention, the facility maintenance data is data that varies over a period in which the product is machined and processed in a facility.

Moreover, in the above-described quality defect diagnosis apparatus according to the present invention, the quality data is data that varies over a length in a specific direction of the product.

Moreover, in the above-described quality defect diagnosis apparatus according to the present invention, the facility maintenance data is data indicating a facility state that has an influence on a specific position of the product by a direct or indirect action on the product and a maintenance state of the facility.

Moreover, in the above-described quality defect diagnosis apparatus according to the present invention, the data aggregation unit is configured to extract the operational data and the facility maintenance data for each predetermined quality defect classification based on a quality defect occurrence tendency having a plurality of quality defect occurrence locations in a longitudinal direction of the product or a quality defect occurrence tendency having a plurality of quality defect occurrence locations in a width direction of the product.

Moreover, in the above-described quality defect diagnosis apparatus according to the present invention, the quality defect determination unit is configured to determine presence or absence of occurrence of a quality defect by using a plurality of prediction models which have been created for each classification of the quality defect and which have been trained to learn a relationship of the quality data with the aggregated facility maintenance data, and the factor estimation unit is configured to estimate a factor of the quality defect based on a determination result of the quality defect.

Moreover, in the above-described quality defect diagnosis apparatus according to the present invention, the result display unit is configured to cause the output unit to display a data group subjected to alignment processing performed in the data aggregation unit.

To solve the above-described problem and achieve the object, a quality defect diagnosis method according to the present invention includes: a data division step of two-dimensionally dividing product data of a diagnosis target into predetermined blocks by a data division unit of a computer, the product data including operational data, facility maintenance data, and quality data,; a data aggregation step performed by a data aggregation of the computer, including extracting the operational data and the facility maintenance data for each predetermined classification of quality defects based on an occurrence tendency of quality defects in the divided blocks, and aggregating the extracted operational data and facility maintenance data for each region including two or more blocks in a specific direction of a product; and a quality defect determination step of determining, by a quality defect determination unit of the computer, presence or absence of occurrence of a quality defect by using a plurality of prediction models which have been created for each classification of the quality defect and which have been trained to learn a relationship of the quality data with the operational data and the facility maintenance data that have been aggregated.

Moreover, the above-described quality defect diagnosis method according to the present invention further includes a factor estimation step of estimating a factor of the quality defect based on a determination result of the quality defect by a factor estimation unit of the computer. Advantageous Effects of Invention

With the quality defect diagnosis apparatus and the quality defect diagnosis method according to the present invention, the quality defect of the product can be predicted with high accuracy and the factor of the quality defect can be estimated by creating and using the relationship of the quality defect with the operational data and the facility maintenance data, as the prediction model, for each classification corresponding to the occurrence tendency of the quality defect.

### Brief Description of Drawings

[FIG. 1] FIG. 1 is a diagram illustrating a schematic configuration of an information processing apparatus that implements a quality defect diagnosis apparatus according to an embodiment of the present invention.
[FIG. 2] FIG. 2 is a diagram illustrating details of a data division step performed by a data division unit of the quality defect diagnosis apparatus according to the embodiment of the present invention.
[FIG. 3] FIG. 3 is a diagram illustrating details of a quality defect classification step performed by a quality defect classification unit of the quality defect diagnosis apparatus according to the embodiment of the present invention.
[FIG. 4] FIG. 4 is a diagram illustrating a first example of a case of classifying quality defects continuous in the product longitudinal direction in the quality defect classification step performed by the quality defect classification unit of the quality defect diagnosis apparatus according to the embodiment of the present invention.
[FIG. 5] FIG. 5 is a diagram illustrating a second example of the case of classifying quality defects continuous in the product longitudinal direction in the quality defect classification step performed by the quality defect classification unit of the quality defect diagnosis apparatus according to the embodiment of the present invention.
[FIG. 6] FIG. 6 is a diagram illustrating a first example of a case of classifying quality defects continuous in the product width direction in the quality defect classification step performed by the quality defect classification unit of the quality defect diagnosis apparatus according to the embodiment of the present invention.
[FIG. 7] FIG. 7 is a diagram illustrating a second example of the case of classifying quality defects continuous in the product width direction in the quality defect classification step performed by the quality defect classification unit of the quality defect diagnosis apparatus according to the embodiment of the present invention.
[FIG. 8] FIG. 8 is a diagram illustrating details of a first example of a result display step performed by a result display unit of the quality defect diagnosis apparatus according to the embodiment of the present invention.
[FIG. 9] FIG. 9 is a diagram illustrating details of a second example of the result display step performed by the result display unit of the quality defect diagnosis apparatus according to the embodiment of the present invention.
[FIG. 10] FIG. 10 is a flowchart illustrating a procedure of a method of creating a prediction model used in a quality defect diagnosis method according to the embodiment of the present invention.
[FIG. 11] FIG. 11 is a flowchart illustrating a procedure of the quality defect diagnosis method according to the embodiment of the present invention.

### Description of Embodiments

A quality defect diagnosis apparatus and a quality defect diagnosis method according to an embodiment of the present invention will be described with reference to the drawings. The quality defect diagnosis apparatus and the quality defect diagnosis method are provided for diagnosing a quality defect that occurs in a product.

Examples of the "product" in the present embodiment include a steel product manufactured through a plurality of processes, including a semi-product such as a slab, and a product such as a steel plate manufactured by rolling the slab. In addition, examples of the "quality defect" in the present embodiment include a surface defect, an internal defect, and a characteristic value of a material (for example, a determination result of a mechanical characteristic).

### (Information processing apparatus)

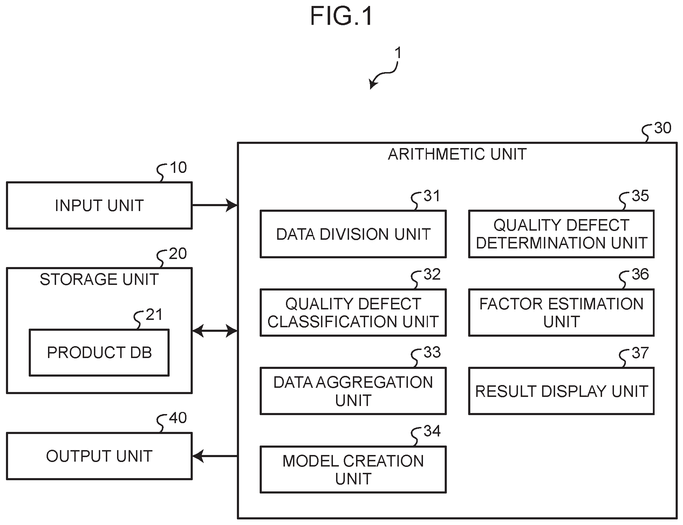

FIG. 1 illustrates a configuration of an information processing apparatus 1 that implements a quality defect diagnosis apparatus according to the embodiment. As illustrated in FIG. 1, the information processing apparatus 1 includes an input unit 10, a storage unit 20, an arithmetic unit 30, and an output unit 40.

The quality defect diagnosis apparatus according to the embodiment can be implemented by components of the information processing apparatus 1 excluding a quality defect classification unit 32 and a model creation unit 34 of the arithmetic unit 30. In addition, the prediction model creation apparatus used in the quality defect diagnosis apparatus according to the embodiment can be implemented by components of the information processing apparatus 1 excluding a quality defect determination unit 35, a factor estimation unit 36, and a result display unit 37 of the arithmetic unit 30. Individual components of the information processing apparatus 1 will be described below.

The input unit 10 is an input means with respect to the arithmetic unit 30, and is implemented by an input apparatus such as a keyboard, a mouse pointer, and a numeric keypad. The input unit 10 inputs information needed for various types of processing in the arithmetic unit 30.

The storage unit 20 includes a recording medium such as Erasable Programmable ROM (EPROM), a Hard Disk Drive (HDD), and a removable medium. Examples of the removable medium include a disk recording medium such as Universal Serial Bus (USB) memory, a compact disc (CD), a Digital Versatile Disc (DVD), or a Blu-ray (registered trademark) disc (BD). The storage unit 20 can store information such as an Operating System (OS), various types of programs, various types of tables, and various types of databases. The storage unit 20 stores a product database (DB) 21.

The product DB 21 stores product data regarding the product manufactured in the past. The product data includes operational data, facility maintenance data, and quality data, for example.

The operational data is data obtained by measuring a manufacturing state at the time of manufacturing the product or by estimating the manufacturing state by some means. This operational data is preferably data that varies over the length in a specific direction of the product. The "data that varies over the length in a specific direction of a product" indicates data that continuously varies with respect to the direction such as the longitudinal direction and the width direction of the product, for example.

Examples of the operational data include, in each manufacturing process of a steel product, manufacturing condition data in a steelmaking process, manufacturing condition data in a hot rolling process, manufacturing condition data in a cold rolling process, and manufacturing condition data in an annealing process. Presumed operational data specifically includes data indicating a component in steel, a steel sheet temperature during hot rolling, a hot rolling speed, a cold rolling speed, a steel sheet temperature during annealing, an annealing time, etc. In addition, the operational data is data obtained by measuring, in the longitudinal direction of the steel sheet, for each predetermined constant length in accordance with the movement distance of each process with respect to the conveyance direction, for example.

The facility maintenance data is data obtained by measuring a facility state at the time of manufacturing the product and a maintenance state of the facility or by estimating the facility state and the maintenance state by some means. The facility maintenance data is preferably data that varies over a period in which the product is machined and processed in the facility. In addition, the facility maintenance data is preferably data indicating a facility state, together with a maintenance state of the facility, that has an influence on a specific position of the product by a direct or indirect action on the product, for example, data directly or indirectly representing a contact state of the facility coming in contact with the product in the manufacturing process.

Examples of the facility maintenance data include data related to a contact state of a conveyance roll that conveys the product by rotating in contact with the product in each manufacturing process of the steel product. In addition, examples of the facility maintenance data include data related to a contact state of a walking beam that comes into contact with the product and lifts and conveys the product in a heating furnace in a heating process before rolling the product. Presumed examples of the facility maintenance data specifically include data of a shape over the width direction of the conveyance roll, data of a contact position of the walking beam with respect to the product, etc.

In addition, among pieces of the facility maintenance data, the data of the shape over the width direction of the conveyance roll is, for example, data obtained by measuring the wear depth of the roll for each predetermined constant length with respect to the width direction of the conveyance roll, as a roll profile. In addition, among pieces of the facility maintenance data, the data of the contact position of the walking beam with respect to the product is calculated, for example, from the total length of the product in the heating furnace and the walking beam position in the heating furnace after measuring the head-tail end positions in the product longitudinal direction in the heating furnace. In this manner, when the prediction model is created and when the quality defect diagnosis is performed, the use of the facility maintenance data enables high accuracy prediction of the quality defect continuous in the specific direction (longitudinal direction or width direction) of the product as described below.

The quality data is data representing defect/non-defect of quality based on a result of measuring or estimating the quality of the product by some means. This quality data is preferably data that varies over a length in a specific direction of the product. Examples of the quality data include surface defect (surface flaw) data of the product. Assumable examples of the quality data specifically include data such as the position and the shape of a surface flaw on the product.

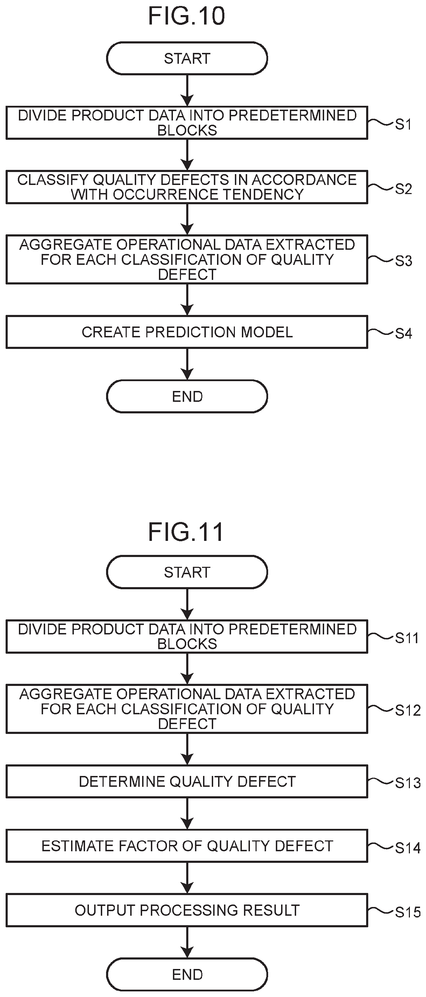

The product data described above includes product data of "past performance" used for creating a prediction model (refer to FIG. 10) and product data of "diagnosis target" used at the time of performing the quality defect diagnosis (refer to FIG. 11).

The storage unit 20 stores, in addition to the product DB 21, product data associated with each block by a data division unit 31, information related to the classification of quality defects by the quality defect classification unit 32, for example. The storage unit 20 stores, in addition to the product DB 21, operational data, facility maintenance data, etc. aggregated in units of blocks by a data aggregation unit 33, for example. In addition, the storage unit 20 may also store, as needed, the quality defect determination result obtained by the quality defect determination unit 35, the factor estimation result of the quality defect obtained by the factor estimation unit 36, etc.

The arithmetic unit 30 is implemented by: a processor including a Central Processing Unit (CPU); and memory (main storage unit) including Random Access Memory (RAM) and Read Only Memory (ROM).

The arithmetic unit 30 loads a program into a work area of the main storage unit and executes a program, and controls each component and the like through the execution of the program, thereby implementing a function that meets a predetermined purpose. Through execution of the program described above, the arithmetic unit 30 functions as the data division unit 31, the quality defect classification unit 32, the data aggregation unit 33, the model creation unit 34, the quality defect determination unit 35, the factor estimation unit 36, and the result display unit 37. FIG. 1 illustrates an example in which the functions of the respective units are implemented by one computer (arithmetic unit), for example. However, means of implementing the functions of the respective units is not particularly limited, and the functions of the individual units may be implemented by a plurality of computers, for example.

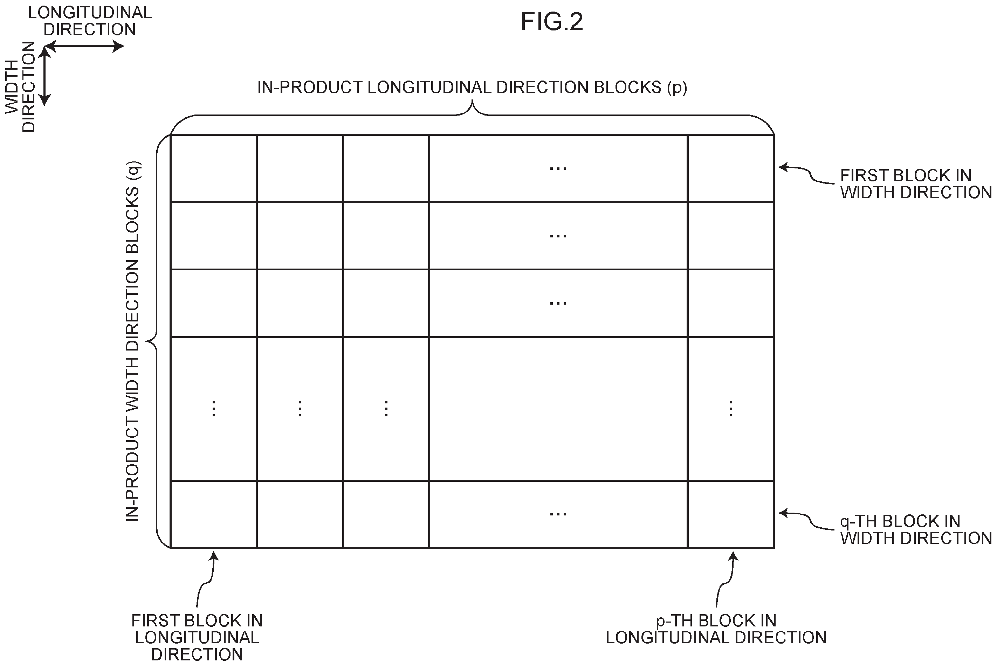

The data division unit 31 two-dimensionally divides the product data into predetermined blocks. First, the data division unit 31 collects operational data, facility maintenance data, and quality data from the product DB 21, for example. Subsequently, as illustrated in FIG. 2, for example, the data division unit 31 divides the total length of the product data in the product longitudinal direction into p blocks, and divides the total length of the product data in the product width direction into q blocks. In the drawing, the leftmost block in the product longitudinal direction is defined as the first block, and the rightmost block is defined as the q-th block. In the drawing, the uppermost block in the product width direction is the first block, and the lowermost block is the p-th block. The data division unit 31 stores the product data including the operational data and the quality data in the storage unit 20 in association with individual blocks obtained by dividing the product as illustrated in FIG. 2.

When creating the prediction model (refer to FIG. 10), the data division unit 31 divides the product data of the past performance. In addition, when performing the quality defect diagnosis (refer to FIG. 11), the data division unit 31 divides the product data of a diagnosis target. In addition, the data division methods (number of divisions, area of each block, etc.) are desirably the same between the time of creating the prediction model and the time of performing the quality defect diagnosis.

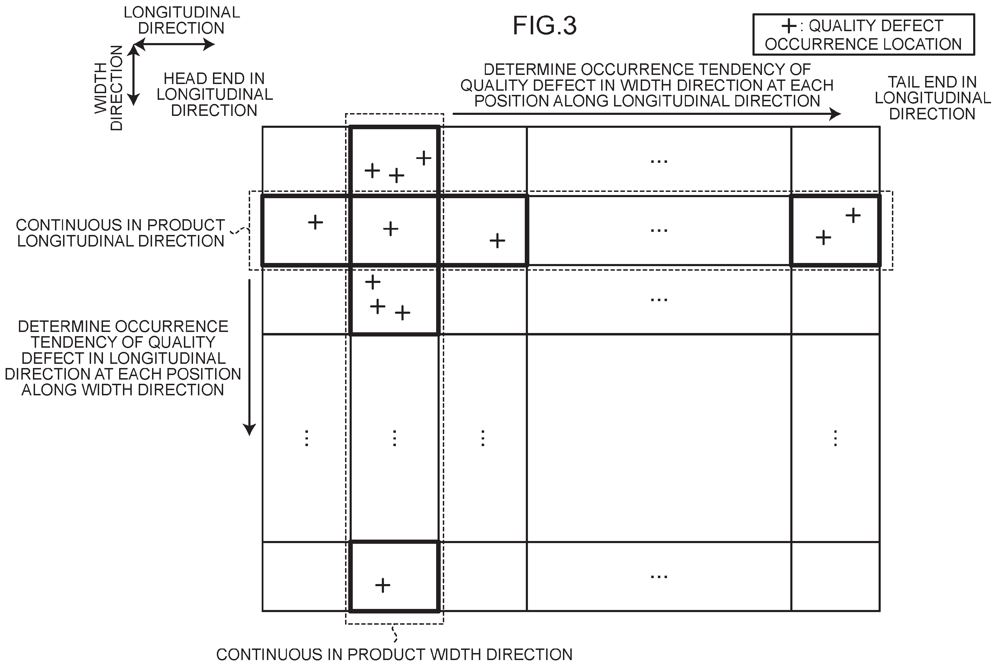

The data division unit 31 divides the total length of each piece of product data in the product longitudinal direction into p blocks, and divides the total length of each piece of product data in the product width direction into q blocks. The number of divisions (value p and value q) of the product data is not particularly limited, but is desirably at least three or more (value q>3 and value p>3). That is, p is an integer satisfying "p ≥ 3", q is an integer satisfying "q ≥ 3", and the values of p and q can be predetermined as any values. In addition, the areas of the respective blocks after the division may be the same or different for each piece of product data. For example, in the classification of quality defects described below (refer to FIG. 3), blocks classified as quality defects continuous in the product longitudinal direction or continuous in the product width direction may have different areas (regions) for each piece of product data.

The quality defect classification unit 32 classifies the quality defects included in the quality data into two or more categories based on the occurrence tendency of the quality defect in the divided blocks. Here, the "occurrence tendency of the quality defect" indicates the occurrence position, the occurrence distribution, etc. of the quality defect in the divided blocks, for example (refer to FIG. 2).

Specifically, the quality defect classification unit 32 classifies the quality defects in the quality data into quality defects continuously occurring along the longitudinal direction of the product (continuous in the product longitudinal direction) and quality defects continuously occurring over the width direction of the product (continuous in the product width direction). For example, as illustrated in FIG. 3, the quality defect classification unit 32 classifies the quality defects in the quality data into either defects continuous in the product longitudinal direction or defects continuous in the product width direction. The quality defect classification unit 32 classifies the quality defects into quality defects continuous in the product longitudinal direction and quality defects continuous in the product width direction based on the following Criteria (1) to (4), for example.
(1) In a case where a plurality of quality defect occurring blocks are present in the product longitudinal direction at each position along the product width direction and where s/p ≥ x holds when the number of quality defect occurring blocks is s, the quality defects are classified as quality defects "continuous in the product longitudinal direction". In this case, x is a certain real number satisfying 0<x≤ 1, and is individually set in accordance with the type of the quality defect.
(2) In a case where a plurality of quality defect occurring blocks are present in the product longitudinal direction at each position along the product width direction and where the quality defect occurring blocks are continuously adjacent in m or more blocks, the quality defects are classified as quality defects "continuous in the product longitudinal direction". In this case, m is a certain integer of 2 or more, and is individually set in accordance with the type of quality defect.
(3) In a case where a plurality of quality defect occurring blocks are present in the product width direction at each position along the product longitudinal direction and where t/q ≥ y holds when the number of quality defect occurring blocks is t, the quality defects are classified as quality defects "continuous in the product width direction". In this case, y is a certain real number satisfying 0<y≤ 1, and is individually set in accordance with the type of the quality defect.
(4) In a case where a plurality of quality defect occurring blocks are present in the product width direction at each position in the product longitudinal direction and where the quality defect occurring blocks are continuously adjacent in n or more blocks, the quality defects are classified as quality defects "continuous in the product width direction". In this case, n is a certain integer of 2 or more, and is individually set in accordance with the type of quality defect.

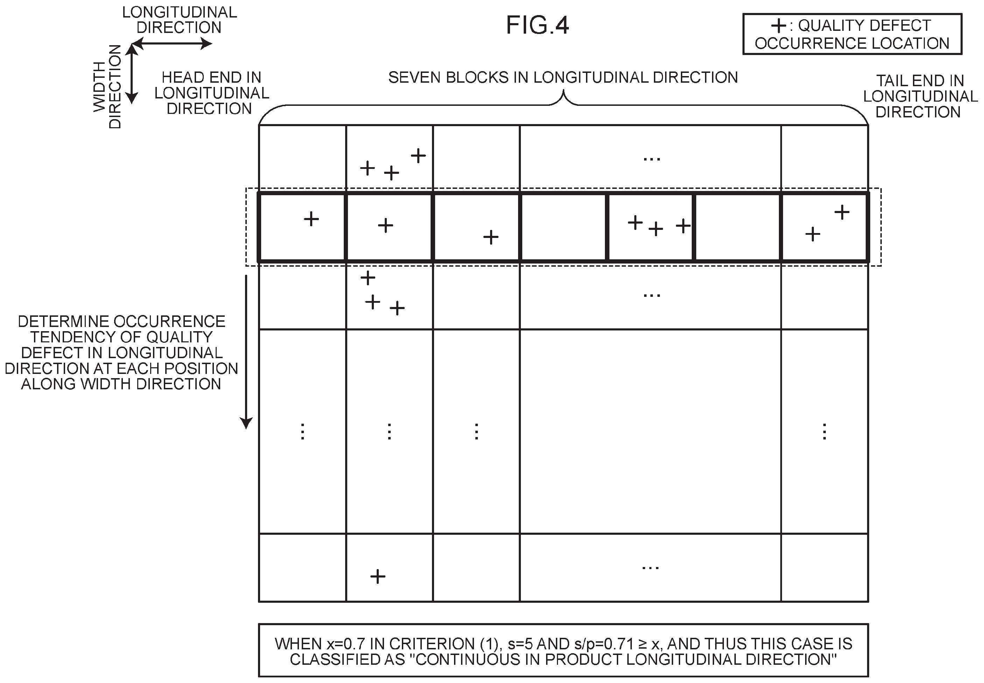

FIG. 4 illustrates a case where the quality defect classification unit 32 classifies the quality defects as quality defects continuous in the product longitudinal direction based on Criterion (1). For example, in the case of "x=0.7" of Criterion (1), "s = 5" and "s/p=0.71 ≥ x" hold, and thus, the quality defects in the drawing are classified as "continuous in the product longitudinal direction". Although the drawing illustrates an example in which the quality defect occurring block is continuous in the product longitudinal direction, even when the quality defect occurring block is not continuous in the product longitudinal direction, this case can also satisfy Criterion (1). For example, even in a case where the quality defect occurring block is present intermittently in the product longitudinal direction, the quality defects are classified as "continuous in the product longitudinal direction" when Criterion (1) is satisfied.

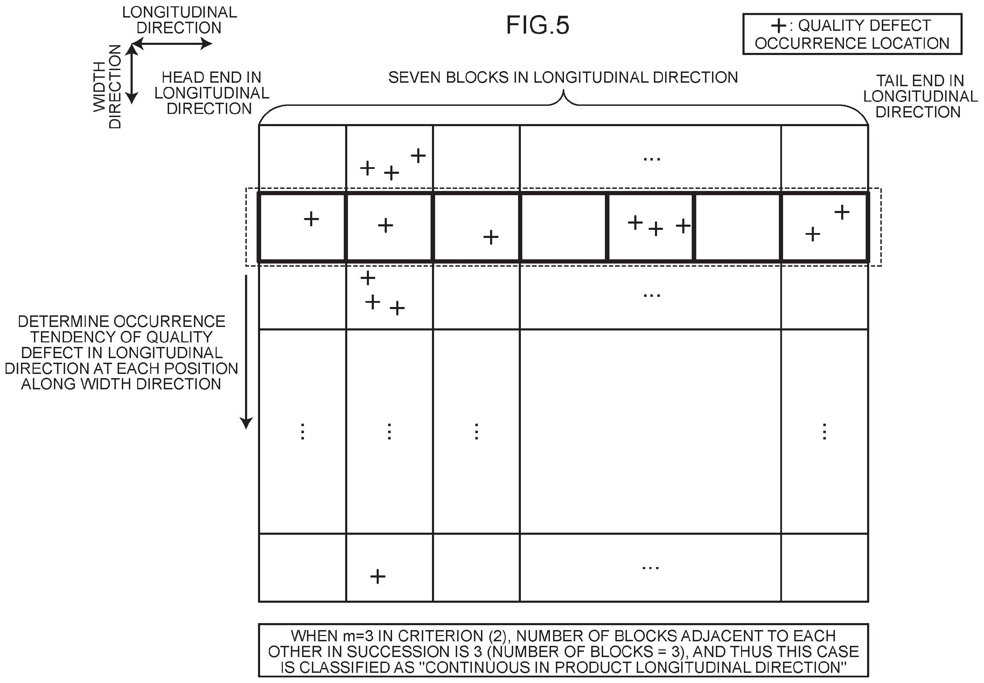

FIG. 5 illustrates a case where the quality defect classification unit 32 classifies the quality defects as quality defects continuous in the product longitudinal direction based on Criterion (2). For example, in the case of "m=3" of Criterion (2), since the number of blocks adjacent continuously in the product longitudinal direction is "3", the quality defects in the drawing are classified as "continuous in the product longitudinal direction".

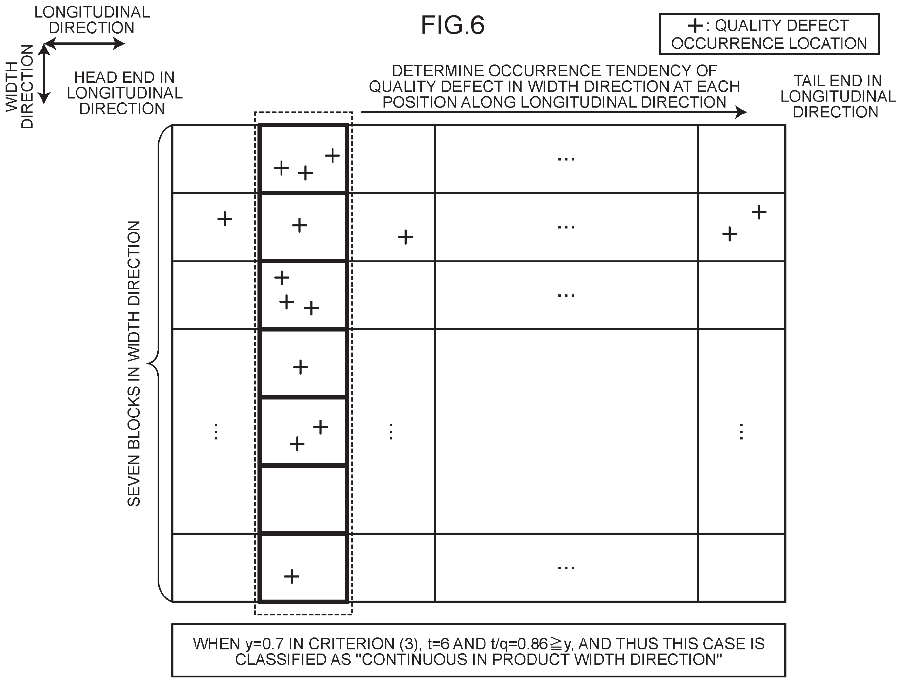

FIG. 6 illustrates a case where the quality defect classification unit 32 classifies the quality defects as quality defects continuous in the product longitudinal direction based on Criterion (3). For example, in the case of "y=0.7" of Criterion (3), "t=6" and "t/q=0.86 ≥ y", and thus, the quality defects in the drawing are classified as "continuous in the product width direction". Although the drawing illustrates an example in which the quality defect occurring block is continuous in the product width direction, even when the quality defect occurring block is not continuous in the product width direction, this case can also satisfy Criterion (1). For example, even in a case where the quality defect occurring block is present intermittently in the product width direction, the quality defects are classified as "continuous in the product width direction" when Criterion (3) is satisfied.

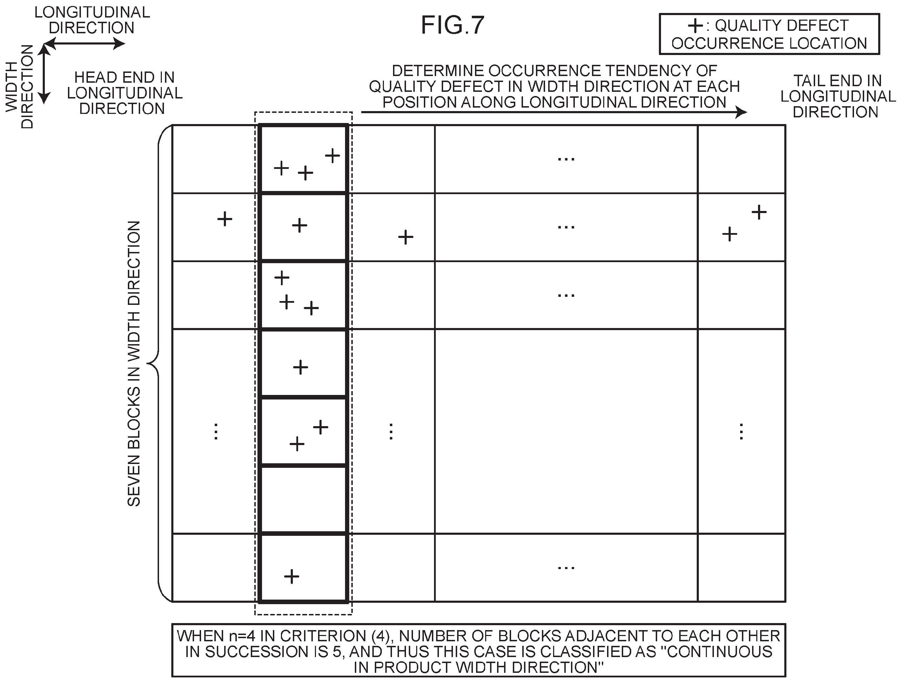

FIG. 7 illustrates a case where the quality defect classification unit 32 classifies the quality defects as quality defects continuous in the product longitudinal direction based on Criterion (4). For example, in the case of "n=4" of Criterion (4), since the number of blocks adjacent continuously in the product width direction is "5", the quality defects in the drawing are classified as "continuous in the product width direction".

The quality defect classification unit 32 stores the information related to the classification of the quality defect processed as described above in the storage unit 20. In addition, the quality defect classification unit 32 classifies the quality data of the past performance when creating the prediction model (refer to FIG. 10). When the quality defect diagnosis is performed (refer to FIG. 11), the operational data and the facility maintenance data of a diagnosis target are aggregated using the classification of the quality defects at the time of creating the prediction model.

The data aggregation unit 33 aggregates the operational data and the facility maintenance data in units of blocks. First, the data aggregation unit 33 extracts the operational data and the facility maintenance data for each classification of the quality defect (refer to FIG. 3) based on the occurrence tendency of the quality defects in the divided blocks. The classification of the quality defects used here is the classification (continuous in product longitudinal direction or continuous in product width direction) of the quality defects classified by the quality defect classification unit 32 at the time of creating the prediction model.

In this case, the data aggregation unit 33 extracts the operational data and the facility maintenance data for each classification of quality defects based on a quality defect occurrence tendency (refer to FIGS. 4 and 5) having a plurality of quality defect occurrence locations (quality defect occurring blocks) in the product longitudinal direction. In addition, the data aggregation unit 33 extracts the operational data and the facility maintenance data for each classification of quality defects based on a quality defect occurrence tendency (refer to FIGS. 6 and 7) having a plurality of quality defect occurrence locations in the product width direction.

Subsequently, the data aggregation unit 33 aggregates the extracted operational data and facility maintenance data for each region including two or more blocks in the specific direction (continuous in product longitudinal direction or continuous in product width direction) of the product. The data aggregation unit 33 aggregates the operational data and the facility maintenance data as follows, for example.

For example, as illustrated in FIGS. 4 and 5, for the quality defects classified as "continuous in product longitudinal direction", the data aggregation unit 33 extracts only the operational data and the facility maintenance data of p blocks in the product longitudinal direction at each position along the product width direction. The data aggregation unit 33 then aggregates the extracted operational data and facility maintenance data in units of blocks.

For example, as illustrated in FIGS. 6 and 7, for the quality defects classified as "continuous in product width direction", the data aggregation unit 33 extracts only the operational data and the facility maintenance data of q blocks in the product width direction at each position along the product longitudinal direction. The data aggregation unit 33 then aggregates the extracted operational data and facility maintenance data in units of blocks.

The method of aggregation in the data aggregation unit 33 can be implemented by adopting basic statistics representing the value of each position in the block, for example. Specifically, the basic statistics include values such as an average value, a maximum value, a minimum value, a standard deviation, a variance, or a range represented by a difference between the maximum value and the minimum value.

In this manner, the data aggregation unit 33 aggregates, in units of blocks, the operational data and the facility maintenance data by calculating any one or more of the average value, the maximum value, the minimum value, the standard deviation, the variance, and the difference between the maximum value and the minimum value, of the operational data and the facility maintenance data. Although at least one type of basic statistics is adopted in the aggregation of the operational data and the facility maintenance data, a plurality of types of basic statistics may be adopted. The data aggregation unit 33 stores, in the storage unit 20, the operational data and the facility maintenance data aggregated to the units of blocks.

The data aggregation unit 33 aggregates the operational data and the facility maintenance data of the past performance when creating the prediction model (refer to FIG. 10). In addition, the data aggregation unit 33 aggregates the operational data and the facility maintenance data of a diagnosis target when performing the quality defect diagnosis (refer to FIG. 11).

The model creation unit 34 creates a plurality of prediction models corresponding to the classification of the quality defect. The model creation unit 34 creates the plurality of prediction models corresponding to the classification of the quality defect by learning, with machine learning, the relationship of the quality data with the operational data and the facility maintenance data that have been aggregated, for each classification of the quality defect.

That is, the model creation unit 34 constructs a prediction model indicating a relationship the of the quality defects occurring in the corresponding block or product with the operational data and the facility maintenance data aggregated in units of blocks, for each classification of the quality defect. The model creation unit 34 creates two types of prediction models that individually predict quality defects continuous in the product longitudinal direction and quality defects continuous in the product width direction, for example. Creation of these prediction models can be performed by using various machine learning algorithms represented by a deep neural network, a decision tree, a support vector machine, for example, and other statistical algorithms.

The quality defect determination unit 35 determines the presence or absence of occurrence of a quality defect using the plurality of prediction models created by the model creation unit 34. The quality defect determination unit 35 determines the presence or absence of occurrence of the quality defect for each classification by inputting the operational data and the facility maintenance data of a diagnosis target to each prediction model for each classification. Here, the operational data and the facility maintenance data input to the prediction model are data aggregated in units of blocks after undergoing data division in the data division unit 31 and data aggregation in the data aggregation unit 33 (refer to FIG. 11).

The quality defect determination by the quality defect determination unit 35 is performed before manufacturing the product or during manufacturing of the product, for example. In the case of performing the determination before manufacturing the product, by inputting setting values of manufacturing conditions and facility conditions before processing to the prediction model as operational data and facility maintenance data of the product to be predicted, for example, and causing the prediction model to perform calculation, a quality defect of the product after the manufacturing is predicted. In the case of performing the determination during manufacturing the product, by inputting performance values of manufacturing conditions and facility conditions after processing to the prediction model as operational data and facility maintenance data of the product to be predicted, for example, and causing the prediction model to perform calculation, a quality defect of the product after the manufacturing is predicted.

The factor estimation unit 36 estimates the factor of the quality defect based on the quality defect determination result obtained by the quality defect determination unit 35. The "factor of the quality defect" represents operational data and facility maintenance data which are important factors of the quality defect of the product, for example.

For example, when a quality defect is determined to occur in a specific product of a diagnosis target, the factor estimation unit 36 can estimate operational data and the facility maintenance data that are needed for suppressing the occurrence of the quality defect. That is, when a quality defect is predicted to occur in the product before or during manufacturing, operational data and facility maintenance data that need to be changed and/or adjusted to prevent the occurrence of the quality defect are estimated. This makes it possible to explore countermeasures for suppressing the occurrence of quality defects.

In addition, when a quality defect occurs in a specific product, the factor estimation unit 36 can estimate the operational data and the facility maintenance data that have caused the occurrence of the quality defect. That is, when there is a quality defect in the manufactured product, the operational data and the facility maintenance data that have caused the quality defect are estimated. This makes it possible to specify the cause of occurrence of the quality defect.

In addition, when a quality defect occurs in a large number of products, the factor estimation unit 36 can estimate the operational data and the facility maintenance data that have caused the occurrence of the quality defect. That is, when there are quality defects in a large number of manufactured products, the operational data and the facility maintenance data that have caused the quality defects can be estimated. This makes it possible to specify the cause of occurrence of the quality defect.

When a quality defect is determined to occur in a specific product of a diagnosis target, and in a case of estimating the operational data and the facility maintenance data needed for suppressing the occurrence of the quality defect, the factor estimation unit 36 calculates an index corresponding to the degree of contribution of each factor in the determination with respect to the data of the product. Subsequently, a factor indicating a large index value is estimated as an important factor. At that time, for example, the method to be used is a general-purpose predicted important factor calculation method that does not depend on a prediction model creation algorithm, represented by a method referred to as "SHapley Additive exPlanations (SHAP)".

In addition, when a quality defect has occurred in a specific product and when estimating the operational data and the facility maintenance data that have caused the occurrence of the quality defect, the factor estimation unit 36 calculates an index corresponding to the degree of contribution of each factor in the determination with respect to the data of the product. Subsequently, a factor indicating a large index value is estimated as an important factor. At that time, the method to be used is a general-purpose predicted important factor calculation method that does not depend on a prediction model creation algorithm such as SHAP described above.

In addition, when quality defects have occurred in a large number of products and when estimating the operational data and the facility maintenance data that have caused the occurrence of the quality defects, the factor estimation unit 36 calculates an index corresponding to the degree of influence of each factor in the entire prediction model. Subsequently, a factor indicating a large index value is estimated as an important factor.

In addition, the factor estimation unit 36 may use a predicted important factor calculation method specific to an algorithm that creates a prediction model, represented by an importance level based on Gini impurity in a decision tree algorithm. Alternatively, the factor estimation unit 36 may use a general-purpose predicted important factor calculation method that does not depend on a prediction model creation algorithm, represented by "Permutation Importance".

The result display unit 37 causes the output unit 40 to display (output) at least one of the determination result obtained by the quality defect determination unit 35 and the factor estimation result obtained by the factor estimation unit 36. In addition, the result display unit 37 preferably causes the output unit 40 to integrally display the data group subjected to alignment processing performed in the data aggregation unit 33.

When causing the output unit 40 to output the quality defect determination result obtained by the quality defect determination unit 35, for example, a product plan view divided in units of blocks for each classification of quality defects is displayed while setting the product longitudinal direction as the horizontal direction and the product width direction as the vertical direction on a screen on which information related to the product of a diagnosis target can be viewed. Subsequently, the quality prediction result for each position of the product is displayed on the product plan view.

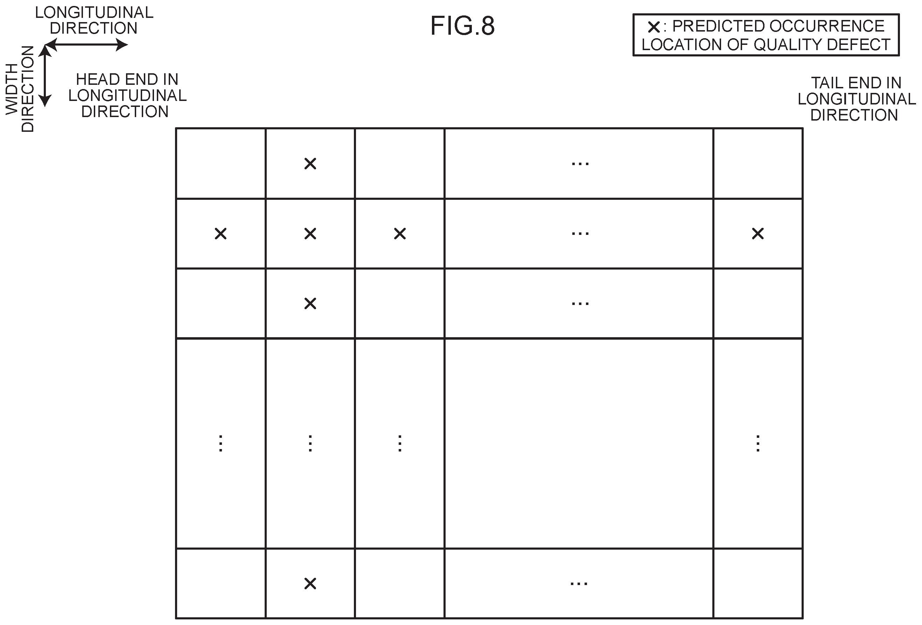

In this case, for example, as illustrated in FIG. 8, a portion (block) with a quality defect may be marked with a cross mark (×) and displayed on the product plan view. Alternatively, a portion having no quality defect may be marked with a circle mark (∘) and a portion having a quality defect may be marked with a cross mark (×), and these portions may be displayed in the product plan view. Alternatively, various colors may be used to perform the display for each prediction result of the presence or absence of a quality defect. Alternatively, the output unit 40 may be caused to output words such as "a quality defect is predicted to occur in the product of a diagnosis target (or a specific block of the product as the diagnosis target)" only in the case where the prediction result indicates the presence of a quality defect.

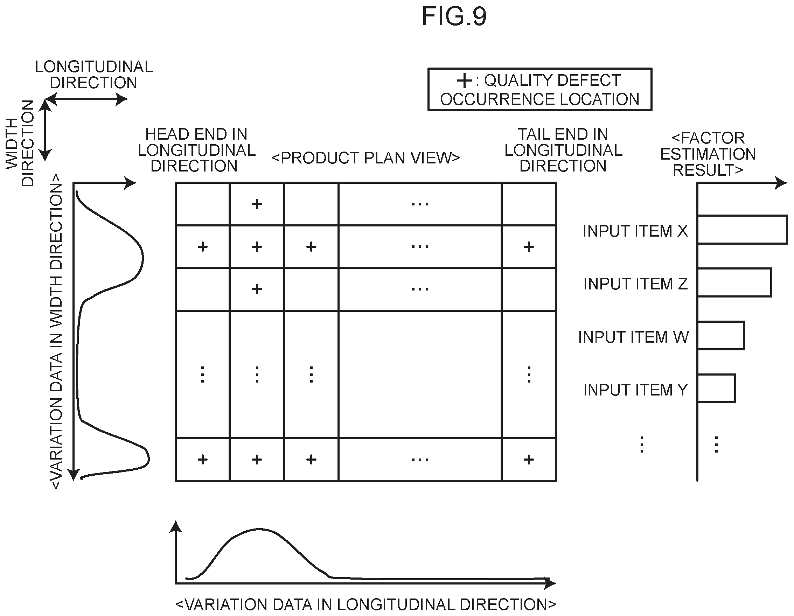

In addition, for example, as illustrated in FIG. 9, one or more pieces of operational data and facility maintenance data varying in the product longitudinal direction may be displayed in a chart form at the lower part (or upper part) of the product plan view. In addition, one or more pieces of operational data and facility maintenance data varying in the product width direction may be displayed in a chart form on the left part (or right part) of the product plan view.

When the quality defect factor estimation result obtained by the factor estimation unit 36 is going to be output to the output unit 40, for example, one product plan view divided in units of blocks for each classification of quality defects is displayed while setting the product longitudinal direction as the horizontal direction and the product width direction as the vertical direction on a screen on which information related to the product of a diagnosis target can be viewed. Subsequently, the quality data and the quality prediction result for each position of the product are displayed on the product plan view. Alternatively, two product plan views may be displayed, and the quality data for each position of the product may be displayed on one of the product plan views while the quality prediction result for each position of the product may be displayed on the other plan view.

In addition, for example, as illustrated in FIG. 9, factor estimation results of quality defects by the factor estimation unit 36 may be displayed to be adjacent to the product plan view. In this case, regarding the factor estimation result, all the items of each piece of input data may be displayed in a list together with the calculated value of the index of the degree of importance, or a certain constant number of items of each piece of input data may be displayed in descending order of the calculated value of the index of the degree of importance. The method of displaying the factor estimation result is not limited, including other methods.

In addition, when the factor estimation result of the quality defect by the factor estimation unit 36 is displayed, one or more pieces of operational data and facility maintenance data varying in the product longitudinal direction may be displayed in a chart form at the upper part or the lower part of the product plan view. Regarding the data to be displayed at that time, a certain constant number of items may be selected and displayed in descending order of the value of the calculated index of the degree of importance.

In addition, when the factor estimation result of the quality defect by the factor estimation unit 36 is displayed, one or more pieces of operational data and facility maintenance data varying in the product width direction may be displayed in a chart form at the left part or the right part of the product plan view. Regarding the data to be displayed at that time, a certain constant number of items may be selected and displayed in descending order of the value of the calculated index of the degree of importance.

The output unit 40 is implemented by a display apparatus such as an LCD display or a CRT display, for example. Based on the display signal input from the result display unit 37, the output unit 40 displays, for example, the quality defect determination result by the quality defect determination unit 35, the factor estimation result of the quality defect by the factor estimation unit 36, etc. in a form of texts, figures, etc.

### (Method of creating prediction model)

A method of creating a prediction model used in the quality defect diagnosis method according to the embodiment will be described with reference to FIG. 10. The method of creating a prediction model includes a block division step (step S1), a quality defect classification step (step S2), a data aggregation step (step S3), and a model creation step (step S4).

In the block division step, the data division unit 31 two-dimensionally divides the product data of the past performance into predetermined blocks (step S1). Subsequently, in the quality defect classification step, the quality defect classification unit 32 classifies the quality defect included in the quality data in accordance with the occurrence tendency of the quality defect in the divided blocks (step S2).

Subsequently, in the data aggregation step, the data aggregation unit 33 aggregates the operational data and the facility maintenance data, which have been extracted for each classification of quality defects, for each region including two or more blocks in the specific direction of the product (product longitudinal direction or product width direction) (step S3). Subsequently, in the model creating step, the model creation unit 34 creates a prediction model by learning, with machine learning, the relationship of the quality data with the operational data and the facility maintenance data that have been aggregated, for each classification of quality defects (step S4).

### (Quality defect diagnosis method)

A quality defect diagnosis method according to the embodiment will be described with reference to FIG. 11. The method of creating a prediction model includes a block division step (step S11), a data aggregation step (step S12), a quality defect determination step (step S13), a factor estimation step (step S14), and a result display step (step S15).

While the following description assumes that a prediction model pre-created in steps S1 to S4 in FIG. 10 at a different timing is used, the prediction model may be created at the time of diagnosis of quality defects. That is, steps S1 to S4 in FIG. 10 and steps S11 to S15 in FIG. 11 may be performed at different timings, or steps S11 to S15 in FIG. 11 may be performed following steps S1 to S4 in FIG. 10.

In the block division step, the data division unit 31 two-dimensionally divides the product data of a diagnosis target into predetermined blocks (step S11). Subsequently, in the data aggregation step, the data aggregation unit 33 aggregates the operational data and the facility maintenance data, which have been extracted for each predetermined classification of the quality defect, for each region including two or more blocks in a specific direction of the product (the product longitudinal direction or the product width direction) (step S12). In step S12, the operational data and the facility maintenance data are extracted using the information related to the classification of the quality defect created in step S2 of FIG. 10, for example.

Subsequently, in the quality defect determination step, the quality defect determination unit 35 determines the presence or absence of occurrence of a quality defect using a plurality of prediction models (step S13). Subsequently, in the factor estimation step, the factor estimation unit 36 estimates the factor of the quality defect based on the result of quality defect determination (step S14). Subsequently, in the result display step, the result display unit 37 causes the output unit 40 to display the processing results of the quality defect determination step and the factor estimation step (step S15).

The quality defect diagnosis apparatus and the quality defect diagnosis method according to the embodiment described above perform classification regarding the part of the product in which a quality defect will occur, and perform diagnosis of the quality defect using a prediction model that is modeled including the classification result. That is, the quality defect diagnosis apparatus and the quality defect diagnosis method corresponding to the embodiment create and use the relationship of the quality defect with the operational data and the facility maintenance data, as the prediction model, for each classification corresponding to the occurrence tendency of the quality defect. This makes it possible to predict the quality defect of the product with high accuracy and estimate the factor of the quality defect.

Hereinabove, the quality defect diagnosis apparatus and the quality defect diagnosis method according to the present invention have been specifically described by the embodiments and implementation examples for carrying out the invention. Note that the scope and spirit of the present invention are not limited to these descriptions, and should be widely interpreted based on the description of the claims. It goes without saying that various changes, modifications, and the like based on these descriptions are also included in the scope and spirit of the present invention.

For example, in the above-described embodiment, the quality defect diagnosis is performed using the plurality of prediction models that have been trained to learn the relationship of the quality data with the operational data and the facility maintenance data. However, the diagnosis may be performed using the plurality of prediction models that have been trained to learn the relationship of the quality data with the facility maintenance data.

In this case, the model creation unit 34 creates the plurality of prediction models corresponding to the classification of the quality defect by learning, with machine learning, the relationship of the quality data with the facility maintenance data that has been aggregated, for each classification of the quality defect. In addition, the quality defect determination unit 35 determines the presence or absence of the occurrence of the quality defect using a plurality of prediction models which have been created for each classification of the quality defect and which have been trained to learn the relationship of the quality data with the facility maintenance data that has been aggregated. The factor estimation unit 36 estimates a factor of the quality defect based on the determination result of the quality defect. In this manner, even when only the facility maintenance data and the quality data are used as the input data of the prediction model, the quality defect of the product can be predicted with high accuracy, and the factor of the quality defect can be estimated.

### Reference Signs List

- 1: INFORMATION PROCESSING APPARATUS
- 10: INPUT UNIT
- 20: STORAGE UNIT
- 21: PRODUCT DB
- 30: ARITHMETIC UNIT
- 31: DATA DIVISION UNIT
- 32: QUALITY DEFECT CLASSIFICATION UNIT
- 33: DATA AGGREGATION UNIT
- 34: MODEL CREATION UNIT
- 35: QUALITY DEFECT DETERMINATION UNIT
- 36: FACTOR ESTIMATION UNIT
- 37: RESULT DISPLAY UNIT
- 40: OUTPUT UNIT

## Claims

1. A quality defect diagnosis apparatus comprising:
a data division unit configured to two-dimensionally divide product data of a diagnosis target into predetermined blocks, the product data including operational data, facility maintenance data, and quality data;
a data aggregation unit configured to
extract the operational data and the facility maintenance data for each predetermined classification of quality defects based on an occurrence tendency of quality defects in the divided blocks, and
aggregate the extracted operational data and facility maintenance data for each region including two or more blocks in a specific direction of a product; and
a quality defect determination unit configured to determine presence or absence of occurrence of a quality defect by using a plurality of prediction models which have been created for each classification of the quality defect and which have been trained to learn a relationship of the quality data with the operational data and the facility maintenance data that have been aggregated.

2. The quality defect diagnosis apparatus according to claim 1, further comprising a factor estimation unit configured to estimate a factor of the quality defect based on a determination result of the quality defect.

3. The quality defect diagnosis apparatus according to claim 2, further comprising a result display unit configured to causes an output unit to display at least one of a determination result obtained by the quality defect determination unit and a factor estimation result obtained by the factor estimation unit.

4. The quality defect diagnosis apparatus according to claim 1, wherein the prediction model is a model created by operations including:
two-dimensionally dividing product data of a past performance, including the operational data, the facility maintenance data, and the quality data, into predetermined blocks;
classifying the quality defect included in the quality data based on an occurrence tendency of the quality defect in the divided blocks;
aggregating the operational data and the facility maintenance data, which have been extracted for each classification of the quality defects, for each region including two or more blocks in a specific direction of the product, and
performing training, with machine learning, to learn a relationship of the quality data with the operational data and the facility maintenance data that have been aggregated, for each classification of the quality defect.

5. The quality defect diagnosis apparatus according to claim 1, wherein the operational data is data that varies over a length in a specific direction of the product.

6. The quality defect diagnosis apparatus according to claim 1, wherein the facility maintenance data is data that varies over a period in which the product is machined and processed in a facility.

7. The quality defect diagnosis apparatus according to claim 1, wherein the quality data is data that varies over a length in a specific direction of the product.

8. The quality defect diagnosis apparatus according to claim 2, wherein the facility maintenance data is data indicating a facility state that has an influence on a specific position of the product by a direct or indirect action on the product and a maintenance state of the facility.

9. The quality defect diagnosis apparatus according to claim 1, wherein the data aggregation unit is configured to extract the operational data and the facility maintenance data for each predetermined quality defect classification based on a quality defect occurrence tendency having a plurality of quality defect occurrence locations in a longitudinal direction of the product or a quality defect occurrence tendency having a plurality of quality defect occurrence locations in a width direction of the product.

10. The quality defect diagnosis apparatus according to claim 8, wherein
the quality defect determination unit is configured to determine presence or absence of occurrence of a quality defect by using a plurality of prediction models which have been created for each classification of the quality defect and which have been trained to learn a relationship of the quality data with the aggregated facility maintenance data, and
the factor estimation unit is configured to estimate a factor of the quality defect based on a determination result of the quality defect.

11. The quality defect diagnosis apparatus according to claim 3, wherein the result display unit is configured to cause the output unit to display a data group subjected to alignment processing performed in the data aggregation unit.

12. A quality defect diagnosis method comprising:
a data division step of two-dimensionally dividing product data of a diagnosis target into predetermined blocks by a data division unit of a computer, the product data including operational data, facility maintenance data, and quality data,;
a data aggregation step performed by a data aggregation of the computer, including
extracting the operational data and the facility maintenance data for each predetermined classification of quality defects based on an occurrence tendency of quality defects in the divided blocks, and
aggregating the extracted operational data and facility maintenance data for each region including two or more blocks in a specific direction of a product; and
a quality defect determination step of determining, by a quality defect determination unit of the computer, presence or absence of occurrence of a quality defect by using a plurality of prediction models which have been created for each classification of the quality defect and which have been trained to learn a relationship of the quality data with the operational data and the facility maintenance data that have been aggregated.

13. The quality defect diagnosis method according to claim 12, further comprising a factor estimation step of estimating a factor of the quality defect based on a determination result of the quality defect by a factor estimation unit of the computer.
